# EUROPÄISCHE PATENTANMELDUNG

(11) **EP 2 194 174 A1**
(43) Veröffentlichungstag der Anmeldung: **09.06.2010**
(21) Anmeldenummer: 09014656.4
(22) Anmeldetag: 25.11.2009
(51) Int. Cl.: D01F 6/62, D01F 6/84

(54) **Bündel aus bioabbaubaren Monofilamenten und deren Verwendung in Wasserbauwerken**

(30) Priorität: 06.12.2008 DE 102008060852
(71) Anmelder: Teijin Monofilament Germany GmbH, 86399 Bobingen (DE)
(72) Erfinder: Meid, Holger, Dr., 89347 Bubesheim (DE); Delker, Rex, Dr., 86517 Wehringen (DE); Hofmann, Herbert, 86343 Königsbrunn (DE)
(74) Vertreter: Ackermann, Joachim

(57) **Zusammenfassung**

Beschrieben werden Monofilamentbündel, die in Form eines Vorhangs an einem Halteelement angebracht sind. Die Monofilamente sind aus Polymer gefertigt, das zu mindestens 90 Gew. %, bezogen auf das Monofilament, aus einem oder mehreren aliphatischen Polyestern besteht. Die Monofilamente sind innen hohl und die beiden Enden der Monofilamente sind verschlossen. Alternativ liegen die Monofilamente in der Form von Stangen mit einem Durchmesser von mindestens 0,4 mm vor.

Die Monofilamentbündel können im Wasserbau zur Verringerung der Fließgeschwindigkeit oder als Leitsystem in Kombination mit Fischtreppen eingesetzt werden.

Die Monofilamentbündel sind kompostierbar und können nach dem Gebrauch biologisch abgebaut werden.

## Beschreibung

Die vorliegende Erfindung betrifft Bündel aus bioabbaubaren Monofilamenten und deren Verwendung im Wasserbau, insbesondere zur Fließberuhigung oder als Fischleitsystem.

Zum Bau von Wasserbauwerken, wie von Staudämmen oder Wehren, in Flüssen ist es erforderlich, ein künstliches Flußbett als Umgehung zu legen. Durch diese wird das Flußwasser geleitet, so daß das ursprüngliche Flußbett trockengelegt ist und somit für den Bau des Wasserbauwerks zugänglich ist. Nach Abschluß der Bauarbeiten wird das ursprüngliche Flußbett wieder geflutet und die Umgehung abgetrennt.

In Wasserbauwerken bzw. deren Umgebung sind häufig sogenannte Fischtreppen vorhanden, die zur Wanderung der Fische erforderlich sind. Mit diesen Fischtreppen werden die Fischzüge an den Staumauern vorbei geleitet und die Fische können den Höhenunterschied über mehrere Stufen - die Fischtreppe - überwinden. Die Umgehung wird deshalb nur teilweise zugeschüttet und eine Fischtreppe wird an der Stelle eingebaut. Der Hauptstrom läuft natürlich über die Staumauer, meist über Turbinen zur Energiegewinnung, während die über die Fisch-treppe laufende Wassermenge im Vergleich zum Hauptstrom relativ gering ist.

Wasserbauwerke, wie Stauwehren, weisen also in der Regel parallel dazu verlaufende Fischtreppen auf, um den Fischen das Aufsuchen ihrer Laichgründe zu ermöglichen. Bei Fischtreppen ist darauf zu achten, das die Stufen nicht zu hoch und die Fließgeschwindigkeit nicht zu groß ist, damit die Fische in der Lage sind, aus eigener Muskelkraft den Höhenunterschied zu überwinden. Ein weiteres Kriterium ist die Gesamthöhe, d.h. die Anzahl der Stufen. Es muß sichergestellt werden, daß die Fische nach einer gewissen körperlichen Belastung eine Ruhezone zur Erholung erreichen. Gegebenenfalls müssen die Fischtreppen mit Ruhezonen unterteilt werden.

Entscheidend für die Fischtreppe ist, dass der Zug der Fische über sie gelenkt wird. Dazu müssen die Fische vom Hauptstrom, der über die Staumauer und die Turbinen führt, ferngehalten werden.

Hierzu werden vor der Umgehung Blöcke auf den Flußgrund heruntergelassen, die zahlreiche Monofilamente in Form eines Vorhanges enthalten. Dieser Vorhang hindert die Fische am Weiterschwimmen. Der Vorhang aus Monofilamenten wird so angeordnet, daß der Fischzug automatisch zur Fischtreppe geleitet wird. Ein sogenannter Fischleitrechen ist beispielsweise aus DE 20 2005 019 791 U1 bekannt.

Dieser Vorhang ist auf beiden Seiten der Staumauer vorzusehen. Einerseits, um die flussaufwärts schwimmenden Fische über die Fischtreppe zu lenken, andererseits, um flussabwärts schwimmende Fische vor dem Einzug in die Turbinen zu schützen.

Die verwendeten Monofilamente sind so dünn und so dicht angeordnet, daß ein Vorhang entsteht, welchen die Fische nicht passieren können. Die verwendeten Monofilamente sind flexibel und passen sich der Wasserströmung an. Bislang eingesetzte Monofilamente sind aus einem Material mit einer Dichte von < 1 g/cm³ hergestellt, beispielsweise aus Polypropylen ("PP") oder aus Polyethylen niedriger Dichte ("LDPE"), und haben somit einen permanenten Auftrieb. Ihre Länge ist üblicherweise größer als die Wassertiefe bei Hochwasser. Dadurch schwimmen die Monofilamente auf und stellen auch bei hohen Pegelständen für die Fische ein nahezu unüberwindliches Hindernis dar.

Ein weiteres Problem, welches bei der Dimensionierung von Fischtreppen zu beachten ist, besteht darin, daß nicht alle Fischarten in gleicher Weise die Fischtreppe überwinden können. Die Treppe muß nach der "schwächsten" Art konzipiert werden und es muß beachtet werden, daß kleinere Fische keine unnötige Mühe mit dem Aufstieg haben.

Auf kleineren bis mittleren Flüssen sind oftmals Wassersportler, beispielsweise Kajakfahrer, unterwegs. An Staustufen und Wehren müssen diese ihr Boot entweder per Hand umsetzen, oder sie haben auf Grund der Konstruktion der Fischtreppe die Möglichkeit, diese für die Talfahrt zu nutzen und den Höhenunterschied direkt zu überwinden.

Da die Fischtreppen in der Regel aus Beton gefertigt sind, führt die Nutzung der Fischtreppe für die Talfahrt des Bootes mit der Zeit zu vielen Schrammen und Riefen am Boot.

Zur Verbesserung der Funktion einer Fischtreppe wäre es vorteilhaft, die Fließgeschwindigkeit des durchströmenden Wassers herabzusetzen. Dieses hätte für die Fische den Vorteil, daß diese die Fischtreppe mit geringerem Kraftaufwand passieren können. Darüber hinaus sollte eine Vorrichtung zum Herabsetzen der Fließgeschwindigkeit so beschaffen sein, daß diese über die Fischtreppe gleitende Boote möglichst schonen sollte.

Diese Funktionen könnten durch die Verankerung von Monofilamentbündeln in der Fischtreppe erreicht werden, die in Strömungsrichtung gesehen, unmittelbar nach den einzelnen Stufen der Fischtreppe angebracht sind. Das hinabfließende Wasser durchströmt die Monofilamentbündel und dabei wird dessen Fließgeschwindigkeit herabgesetzt. Bevorzugt sind die einzelnen Monofilamente im Bündel in etwa so lang wie die Stufe hoch ist. Dadurch müssen die Fische keinen zusätzlichen Höhenunterschied überwinden und haben auf der Folgestufe eine reduzierte Fließge-schwindigkeit. Ebenso können Kanuten über die Stufe gleiten. Die Beton-kante wird kaum noch berührt. Das Boot gleitet über die Monofilamentbündel hinab, so daß der Unterboden geschont wird.

Ein Problem der vorstehend geschilderten Fischleitsysteme oder der Vorrichtungen zur Herabsetzung der Fließgeschwindigkeit ist, daß die eingesetzten Monofilamente Träger für Kleinlebewesen, wie Bakterien oder Algen, sind. Die Bündel aus Monofilamenten werden durch Aufbau von Biomasse mit der Zeit so dicht, daß kein vernünftiger Wasserdurchfluss mehr gewährleistet ist. Das Wasser sucht sich bei verdichteten Vorhängen seinen Weg, indem es entweder die Vorhänge überflutet oder - falls möglich - diese seitlich umfließt. Damit verlieren diese Vorhänge ihre Funktion und es können wieder Fische in den gesperrten Bereich vor der Staumauer vordringen oder die Fließgeschwindigkeit in der Fischtreppe wird durch das vermehrte Überspülen der Stufe vergrößert, so daß sich die Funktion der Fließberuhigung sogar in ihr Gegenteil verkehrt.

Deshalb müssen diese Vorhänge aus Monofilamenten bei einem gewissen Grad an Bewuchs mit Kleinlebewesen ausgetauscht werden. Nachteilig dabei ist, daß herkömmlich eingesetzte Monofilamente (PP oder LDPE) auf der Deponie nicht oder nur sehr langsam verrotten. Für solche Materialien bleibt praktisch nur der Entsorgungsweg über die Abfallverbrennung in geeigneten Anlagen.

Fäden enthaltend Polymilchsäure als polymeren Bestandteil sind aus anderen Dokumenten bereits bekannt, beispielsweise aus EP 0 288 041 A2 , WO 2007/136,086 A1, WO 2007/029,688 A1 und EP 1 460 096 A1. Diese Dokumente offenbaren keinen Einsatz der Fäden in Wasserbauwerken.

Aus der DE 692 00 343 T2 ist ein Implantatmaterial mit hoher Festigkeit und hohem Modul bekannt. Dies wird durch den Einsatz von mehrere Polymer-Struktureinheiten mit hochgereckten Kernen erreicht, wobei diese in einer nicht gereckten Polymermatrix eingebettet sind, welche durch eine Lösungsmittelbehandlung der gereckten Polymer-Struktureinheiten hergestellt wurde. Das so erstellte Polymer wird zur Bildung eines Monofilamentbündels oder eines Foliensandwiches verwendet und anschließend einem weiteren Umformprozess unterworfen.

Die DE 689 26 305 T2 beschreibt die Herstellung von Implantatmaterialien, wobei die zugrundeliegende Matrix ebenso biologisch abbaubar sein soll wie die verwendeten Verstärkungselemente. Um eine ausreichende Stabilität des so hergestellten Implantates zu rechtfertigen, besteht das Implantat aus einem einzigen Stab, der durch eine mindestens teilweise und eine mindestens einmal helikoidale Wicklung erstellt wird.

Aufgabe der vorliegenden Erfindung ist die Bereitstellung von Monofilamentbündeln, die einfach hergestellt werden können, die Funktion bekannter in Wasserbauwerken eingesetzter Bündel übernehmen können und die darüber hinaus nach dem Einsatz gut biologisch abbaubar sind.

Es wurde nun überraschend gefunden, dass Monofilamentbündel aus ausgewählten Polymeren sich hervorragend als Fischleitsysteme bzw. zur Beruhigung der Fließgeschwindigkeit des Wassers in Wasserbauwerken einsetzen lassen.

Die Erfindung betrifft ein Monofilamentbündel in Form eines Vorhangs angebracht an einem Halteelement. Die Monofilamente des erfindungsgemäßen Bündels sind aus Polymer gefertigt, das zu mindestens 90 Gew. %, bezogen auf das Monofilament, aus einem oder mehreren aliphatischen Polyestern besteht; außerdem sind die Monofilamente innen hohl und die beiden Enden der Monofilamente sind verschlossen oder die Monofile liegen in der Form von Stangen vor mit einem Durchmesser von mindestens 0,4 mm.

Bei den im erfindungsgemäßen Bündel eingesetzten aliphatischen Polyestern kann es sich um unterschiedliche Typen handeln. Solche Polymere sind thermoplastisch und sind dem Fachmann als bioabbaubare Polymere bekannt.

Die Polymerkomponente der im erfindungsgemäßen Bündel verwendeten Monofilamente ist ein aliphatischer Polyester oder eine Mischung von aliphatischen Polyestern. Dabei handelt es sich um Polymere abgeleitet von einem aliphatischen Monomeren mit einer Carboxylgruppe oder einem polyesterbildendenden Derivat, wie einer Carbonsäureestergruppe, und einer Hydroxylgruppe oder einem polyesterbildenden Derivat, wie einer Ethergruppe, oder um Polymere abgeleitet von einer Kombination eines aliphatischen Monomeren mit zwei Carboxylgruppen oder polyesterbildenden Derviaten davon mit einem aliphatischen Diol oder polyesterbildenden Derivaten davon.

Der Begriff "aliphatischer Polyester" umfasst neben ausschließlich aus aliphatischen und/oder cycloaliphatischen Monomeren aufgebauten Polyestern auch solche Polyester, die neben aliphatischen und/oder cylcoaliphatischen Struktureinheiten geringe Anteile aromatischer Struktureinheiten, solange dadurch die Bioabbaubarkeit dieser Polyesters nicht nachteilig beeinträchtigt wird.

Polymere abgeleitet von aliphatischen Monomeren mit einer Carboxylgruppe und einer Hydroxylgruppe werden auch als Polyhydroxyalkanoate bezeichnet.

Beispiele für bevorzugte aliphatische Polyester dieses Typs sind Polyhydroxy-butyrat, Poly-(hydroxybutyrat-co-hydroxyvalerat), Poly-(hydroxybutyrat-co-polyhydroxy-hexanoat), Polyglycolsäure, Poly-(epsilon-caprolacton) und besonders bevorzugt Polymilchsäure ("PLA").

Beispiele für bevorzugte aliphatische Polyester, die sich von einer Kombination aliphatischer Dicarbonsäuren mit einem aliphatischen Dialkohol ableiten, sind Poly-(butylensuccinat), Poly-(ethylensuccinat), Poly-(butylenadipat), Poly(ethylenadipat), Poly-(tetramethylenadipat/terephthalat).

Besonders bevorzugt eingesetzte aliphatische Polyester sind Homo- oder Copolymerisate abgeleitet von Milchsäure und gegebenenfalls damit copolymerisierbaren aliphatischen Comonomeren.

Unter Monofilamenten werden im Rahmen dieser Beschreibung ganz allgemein einzelne Fasern mit Längen von mehr als einem Meter verstanden. Der Durchmesser dieser Monofilamente wird nach dem angestrebten Einsatzzweck ausgewählt. Um ausreichende Steifigkeiten zu gewährleisten, beträgt der Durchmesser der Monofilamente typischerweise mindestens 0,4 mm, bevorzugt mindestens 0,5 mm, besonders bevorzugt von 1 bis 80 mm und ganz besonders bevorzugt von 10 bis 30 mm.

Die Querschnittsform der erfindungsgemäß vewendeten Monofilamente kann beliebig sein, beispielsweise rund, oval oder n-eckig, wobei n größer gleich 3 ist. Bei nicht-kreisförmigen Querschnitten wird unter Durchmesser im Rahmen dieser Beschreibung der größte Durchmesser verstanden.

Nachteilig an den erfindungsgemäß eingesetzten Polymeren im Vergleich zu den leichteren Werkstoffen PP oder LDPE ist deren vergleichsweise hohe Dichte von größer als 1,0 g/cm³. So beträgt die Dichte der teilkristallinen PLA 1,24 g/cm³. Das Material hat damit keinen Eigenauftrieb. Um dennoch die Barrierewirkung auch bei Hochwasser zu gewährleisten, muß entweder der Durchmesser der Monofile so groß gewählt werden, daß die Steifheit des Materials ausreicht, auch bei Hochwasser über die Wasseroberfläche hinauszuragen, oder die effektive Dichte der Monofilamente muß verringert werden, indem diese als Hohlfasern eingesetzt werden.

Beim Einsatz als Fischleitsystem in Flüssen befinden sich die Leitsysteme im allgemeinen weit vor und/oder hinter dem Staudamm. Die Flüsse sind hier in der Regel flach, üblicherweise mit Wassertiefen von kleiner als 2 m. Damit das Fischleitsystem funktioniert, werden Hohlmonofilamente oben und unten verschlossen, so dass sich eine effektive Dichte von < 1 g/cm³ ergibt, und die Monofilamente werden in Bündeln in einem Halteelement fixiert, das auf den Flussgrund abgelassen wird.

Infolge der effektiven Dichte von < 1 g/cm³ schwimmen die Hohlmonofilamente auf und passen sich so der Wassertiefe an. Durch die leichte Strömung biegen sich die Bündel aus Hohlmonofilamenten in Fließrichtung und bilden somit einen dichten, für Fische undurchlässigen Vorhang. Die Fische wählen dann den Weg über parallel verlaufende Fischtreppen.

Um den Vorhangeffekt zu gewährleisten und zur Anpassung an die Wassertiefe müssen diese Hohlmonofilamente flexibel sein, d.h. sie müssen ausreichend geringe Wandstärken im Vergleich zum Durchmesser haben.

Alternativ können beim Einsatz als Fischleitsystem in Flüssen auch Vollprofilmonofilamente ("Stangen") eingesetzt werden. Unter Stangen werden im Rahmen dieser Beschreibung Monofilamente mit Durchmessern von mindestens 0,4 mm mit Vollprofil verstanden; diese weisen in der Regel keine Hohlräume auf.

Stangen werden vorzugsweise in Fischtreppen eingesetzt. Bei diesem Einsatz sollten die Monofilamente möglichst steif sein, da sie als Sperre die Fliessgeschwindigkeit herabsetzen sollen. Die verwendeten Stangen sind ebenfalls in Bündeln in einer Haltevorrichtung fixiert und befinden sich am Boden der Stufen der Fischtreppen. Das Wasser muss diese relativ dichten Sperren aus Stangen passieren. Die Fließgeschwindigkeit wird dadurch herabgesetzt (Erholungszonen insbesondere für kleine Fische). Typische Durchmesser dieser Vollprofile betragen 0,40 mm bis 20 mm, bevorzugt 5 mm bis 15 mm. Die Länge der Stangen ist in der Regel etwa so hoch wie die Stufe der Fischtreppe, gegebenenfalls etwas höher.

Als weiterer Vorteil dieser Lösung ist festzustellen, dass Kanuten über diese Fischsperren "gleiten" können. Dabei rutscht der Bootsboden über die Stangen hinweg und wird nicht durch die Betonkanten der Fischtreppe zerkratzt.

Alternativ können natürlich auch Hohlmonofilamente in Fischtreppen eingesetzt werden.

Beim Einsatz als Fischleitsystem in Flüssen mit Wassertiefen von mehr als 2 Meter wären Monofilamente mit Durchmessern von mindestens 20 mm erforderlich, um eine ausreichende Steifheit der Monofilamente zu erreichen. In dieser Ausführungsform werden die Monofilamente also vorzugsweise in der Form von Stangen eingesetzt.

Mit ansteigender Höhe der Stufe der Fischtreppe und mit wachsender Fließgeschwindigkeit werden die Monofilamentbündel stärker aus ihrer Ursprungslage ausgelenkt. Um zu starke Auslenkungen zu vermeiden, sind entsprechend große Durchmesser erforderlich, damit die Steifheit der Monofilamentstränge dieser Belastung entgegen wirkt.

Beim Einsatz in Fischtreppen sind deshalb Durchmesser von 0,4 bis 20 mm, vorzugsweise 0,5 bis 20 mm üblich, besonders bevorzugt 5 mm bis 15 mm.

Die bevorzugte Alternative ist die Verwendung von Hohlmonofilamenten aus aliphatischem Polyester, vorzugsweise aus PLA.

Für den Einsatz im Wasserbau werden die Hohlmonofilamente oben und unten verschlossen, vorzugsweise zugeschweißt, damit kein Wasser in den inneren Hohlraum eindringen kann.

Beim Einsatz von PLA muß der innere Durchmesser mindestens 60 % des äußeren Durchmessers betragen, damit bei der Polymerdichte von 1,24 g/cm³ eine "Konstruktionsdichte" des Monofilaments von knapp 1 g/cm³ (rechnerisch von 0,992 g/cm³) erreicht wird.

Besonders bevorzugt wählt man Innendurchmesser von 65 % bis 70 % des Außendurchmessers. Dadurch erreicht man beim Einsatz von PLA Dichten von 0,94 bis 0,89 g/cm³. Diese Werte entsprechen denen der bislang in der Praxis eingesetzten Monofilamente aus PP oder aus LDPE.

Monofilamente aus aliphatischen Polyestern, insbesondere Hohlmonofilamente, können die Monofilamente aus bisher verwendeten Materialien ersetzen. Aliphatische Polyester haben den Vorteil, daß sie sich im Wasser - auch bei Kontakt mit schlammigem Bodengrund - noch nicht biologisch zersetzen, da die Temperaturen dafür zu niedrig sind. Erst nach Austausch wegen Bewuchses mit Kleinlebewesen wird das Material kompostiert und baut dann vollständig biologisch ab.

Vorteilhaft bei der Verwendung von PLA ist, daß diese Fischleitsysteme aus PLA-Monofilamenten CO₂-neutral sind und damit die Umweltbelastung verringern.

Das polymere Grundmaterial des erfindungsgemäß eingesetzten Monofilamente kann durchsichtig oder optisch klar sein, vorzugsweise jedoch matt, um den Zutritt von elektromagnetischer Strahlung bei der Anwendung möglichst einzuschränken.

Die erfindungsgemäß eingesetzen Monofilamente können an sich bekannte Zusätzen in den an sich bekannten Mengen enthalten.

Beispiele dafür sind UV-Stabilisatoren, wie Benzophenone, Phosphite, Triazine, Benzotriazole, sterisch gehinderte Amine (hindered amine light stabilizers "HALS") oder Kombinationen von zwei oder mehreren dieser UV-Stabilisatoren.

Das Einbringen oder das Aufbringen des UV-Stabilisators in oder auf den aliphatischen Polyester kann nach verschiedenen im Stand der Technik beschriebenen Verfahren ausgeführt werden.

Weitere mögliche Zusätze sind Farbstoffe und/oder Pigmente. Unter einem Farbstoff ist im Rahmen dieser Beschreibung eine färbende Verbindung zu verstehen, welche im aliphatischen Polyester gelöst vorliegt; unter einem Pigment ist im Rahmen dieser Beschreibung eine färbende Verbindung zu verstehen, welche im aliphatischen Polyester dispergiert vorliegt. Ein Pigment kann auch die Funktion eines Mattierungsmittels aufweisen.

Beispiele für Pigmente sind organische Farbstoffpigmente oder Titandioxid.

Die erfindungsgemäß eingesetzten Monofilamente bestehen hauptsächlich aus dem aliphatischen Polyester. Der Anteil an Zusatzstoffen bewegt sich typischerweise im Bereich von weniger als 5 Gew. %.

Die zur Herstellung der erfindungsgemäßen Monofilamente benötigten Komponenten sind an sich bekannt, teilweise kommerziell erhältlich oder können nach an sich bekannten Verfahren hergestellt werden.

Die erfindungsgemäßen Monofilamentbündel sind aus den Monofilamenten und einem Halteelement aufgebaut. Das Halteelement dient zur Befestigung der Monofilamente in Form eines Vorhanges. Halteelemente können verschiedene Formen aufweisen und aus unterschiedlichen Materialien bestehen. Beispielsweise kann es sich um Stangen handeln oder um Blöcke.

Die Halteelemente können aus Materialien bestehen, die ein größeres spezifisches Gewicht als Wasser haben. Diese Halteelemente treiben daher im Wasser nicht auf und halten den unteren Teil des Vorhanges aus Monofilamenten auf dem Grund des Fließgewässers. Ein Beispiel für solche Halteelemente sind Formkörper aus Beton oder Metall.

Die Halteelemente können aber auch aus Materialien bestehen, die ein geringeres spezifisches Gewicht als Wasser haben. Diese Halteelemente würden unbefestigt im Wasser auftreiben. Sie sind daher an der vorgesehenen Position, beispielsweise am unteren Teil der Stufe einer Fischtreppe, zu befestigen und halten sodann den unteren Teil des Vorhanges aus Monofilamenten auf dem Grund der Stufe der Fischtreppe. Ein Beispiel für solche Halteelemente sind Stangen aus Holz oder aus Kunststoff, insbesondere aus aliphatischem Polyester, ganz besonders bevorzugt aus PLA.

Die Monofilamente sind an den Halteelementen in Form eines Vorhanges stehend angebracht. Dazu werden jeweils die unteren Abschnitte der Monofilamente am Halteelement befestigt. Dem Fachmann sind geeignete Befestigungsmethoden bekannt. Die Monofilamente werden so am Halteelement angebracht, dass sie sich beim Gebrauch in Form eines Vorhanges ausrichten. Beispielsweise können die Monofilamente beabstandet in Form einer Linie auf dem Halteelement angebracht werden.

Es können auch mehrere Linien vorgesehen sein, so daß sich mehrere Vorhänge von Monofilamenten ausbilden.

Die Herstellung der erfindungsgemäß eingesetzten Monofilamente kann nach dem Fachmann gut bekannten Verfahren erfolgen.

So kann das Polymer mittels Extrusion aufgeschmolzen werden und die Schmelze über eine Zahradpumpe in ein sogenanntes Spinnpack weitergeleitet werden. Im Spinnpack wird das flüssige Polymer über Sand, Metallpulver oder Keramik filtriert, bevor es durch die Spinndüse gedrückt wird.

Bei der Herstellung von Monofilamenten mit durchgehend mit Polymer gefülltem Durchmesser kommen Spinndüsen mit Feinbohrungen zum Einsatz.

Bei der Herstellung von Hohlmonofilamenten besteht die Spinndüse meist aus zwei Halbringen oder drei Drittelringen. Direkt unterhalb der Spinndüse verschmelzen die Halbsegmente bzw. Drittelsegmente miteinander und formen so das Hohlmonofilament. Alternativ können natürlich auch Spinndüsen mit noch mehr Einzelsegmenten eingesetzt werden.

Wenige Zentimeter hinter der Spinndüse wird das geformte Monofilament in einem Wasserbad auf eine Temperatur unterhalb der Schmelztemperatur abgekühlt. Über mehrere Streckwerke wird es anschließend mehrstufig unter Temperatureinwirkung verstreckt und aufgespult.

In einem folgenden Arbeitsschritt werden die Monofilamente auf die gewünsche Länge geschnitten. Die Hohlmonofilamente werden danach noch an den Enden verschweißt.

Anschließend werden die Monofilamente in das betreffende Halteelement, beispielsweise in einen Betonblock, eingesetzt.

Das so erhaltene Monofilamentbündel kann zusammen mit dem Halteelement an der betreffenden Stelle des Fließgewässers oder der Fischtreppe auf deren Grund abgelassen werden.

Ein weiterer Gegenstand der vorliegenden Erfindung ist die Verwendung der erfindungsgemäßen Monofilamentbündel als Leitelement für den Zug von Fischen in Wasserbauwerken, vorzugsweise in Staudämmen oder Wehren, die mit mindestens einer Fischtreppe ausgerüstet sind.

Noch ein weiterer Gegenstand der vorliegenden Erfindung ist die Verwendung der erfindungsgemäßen Monofilamentbündel zur Fließberuhigung in Wasserbauwerken, insbesondere in Fischtreppen.

## Patentansprüche

1. Monofilamentbündel in Form eines Vorhangs angebracht an einem Halteelement, wobei die Monofilamente aus Polymer gefertigt sind, das zu mindestens 90 Gew. %, bezogen auf das Monofilament, aus einem oder mehreren aliphatischen Polyestern besteht, und wobei die Monofilamente innen hohl sind und die beiden Enden der Monofilamente verschlossen sind oder wobei die Monofilamente in der Form von Stangen mit einem Durchmesser von mindestens 0,4 mm vorliegen.

2. Monofilamentbündel nach Anspruch 1, **dadurch gekennzeichnet, dass** der aliphatische Polyester ausgewählt wird aus der Gruppe Polyhydroxy-butyrat, Poly-(hydroxybutyrat-co-hydroxyvalerat), Poly-(hydroxy-butyrat-co-polyhydroxy-hexanoat), Polyglycolsäure, Poly-(epsilon-caprolacton), Polymilchsäure, Poly-(butylensuccinat), Poly-(ethylen-succinat), Poly-(butylenadipat), Poly(ethylenadipat), Poly-(tetra-methylenadipat/terephthalat) oder aus Gemischen von zwei oder mehreren davon.

3. Monofilamentbündel nach Anspruch 2, **dadurch gekennzeichnet, dass** der aliphatische Polyester ein Milchsäurehomo- oder -copolymer ist.

4. Monofilamentbündel nach Anspruch 1, **dadurch gekennzeichnet, dass** der aliphatische Polyester ein Milchsäurehomo- oder -copolymer ist und dass der innere Durchmesser mindestens 60 % des äußeren Durchmessers beträgt.

5. Monofilamentbündel nach einem der Ansprüche 1 bis 3, **dadurch gekennzeichnet, dass** der Durchmesser der Monofilamente mindestens 20 mm beträgt.

6. Monofilamentbündel nach einem der Ansprüche 1 bis 5, **dadurch gekennzeichnet, dass** die Haltevorrichtung eine Stange ist, die vorzugsweise aus Kunststoff, besonders bevorzugt aus einem oder mehreren aliphatischen Polyestern, oder aus Holz besteht.

7. Monofilamentbündel nach einem der Ansprüche 1 bis 5, **dadurch gekennzeichnet, dass** die Haltevorrichtung ein Beton- oder Metallformteil ist, bei dem die Monofilamente auf einer Seite in Form eines Vorhangs stehend eingelassen sind.

8. Verwendung von Monofilamentbündeln nach einem der Ansprüche 1 bis 7 als Leitelement für den Zug von Fischen in Wasserbauwerken.

9. Verwendung nach Anspruch 8, **dadurch gekennzeichnet, daß** es sich bei dem Wasserbauwerk um einen Staudamm oder ein Wehr handelt, das vorzugsweise mit mindestens einer Fischtreppe ausgerüstet ist.

10. Verwendung von Monofilamentbündeln nach einem der Ansprüche 1 bis 7 zur Fließberuhigung in Wasserbauwerken, insbesondere in Fischtreppen.
